# EUROPEAN PATENT APPLICATION

(11) **EP 3 492 723 A1**
(43) Date of publication of application: **05.06.2019**
(21) Application number: 17850515.2
(22) Date of filing: 29.06.2017
(51) Int. Cl.: F02D 9/02, F02B 37/12, F02B 37/18

(54) **TURBOCHARGER-EQUIPPED ENGINE AND METHOD FOR OPERAING TURBOCHARGER-EQUIPPED ENGINE**

(30) Priority: 15.09.2016 JP 2016180235
(71) Applicant: Yamaha Hatsudoki Kabushiki Kaisha, Iwata-shi, Shizuoka 438-8501 (JP)
(72) Inventor: YAMADA,Takeshi, Iwata-shi Shizuoka 438-8501 (JP)
(74) Representative: Stöckeler, Ferdinand
(86) International application number: PCT/JP2017/023876
(87) International publication number: WO 2018/051609

(57) **Abstract**

A turbocharged engine includes an intake port (6) and an exhaust port (7) connected to a combustion chamber (5), a surge tank (12), and a turbocharger (21) including a turbine (24) installed midway along an exhaust passage (13) and a compressor (22) which rotates together with the turbine (24). The turbocharged engine further includes a wastegate valve (26) for controlling the supercharging pressure of the turbocharger (21), a throttle valve (15) installed in an intake passage (17) between the compressor (22) and surge tank (12), and a controller (14) for controlling the operations of a control valve and the throttle valve (15). When the engine operation range is in a full-load operation range, the controller (14) sets the maximum opening degree of the throttle valve (15) to an opening degree closer to the closing-side than a full-throttle opening degree, and controls the throttle valve (15) so that the compressor efficiency of the compressor (22) becomes higher than a full-throttle compressor efficiency. When the engine operation range is in the full-load operation range, the compressor efficiency increases, so the engine output can further be increased.

## Description

### Technical Field

The present invention relates to a turbocharged engine in which a throttle valve and a wastegate valve are electronically controlled, and to a method of operating the turbocharged engine.

### Background Art

When obtaining the full-load performance of a turbocharged gasoline engine, a throttle opening degree is conventionally operated at wide-open throttle (WOT) except in a low-rotation range (e.g., 3,000 rpm or less). Torque control is performed by adjusting the supercharging pressure of the turbocharger by increasing/decreasing the opening degree of a wastegate valve.

Generally, the compressor of a turbocharger to be used in this kind of an engine is designed so that the maximum efficiency is obtained at an air flow rate about half that when the engine generates the maximum output. Therefore, if the air flow rate exceeds half of the air flow rate required to generate the maximum output, the compressor is used in a low-efficiency state.

### Disclosure of Invention

### Problem to be Solved by the Invention

In the conventional turbocharged engine, the compressor efficiency is low in a full-load operation range as an engine operation range in which the output is relatively high, and this makes it difficult to further increase the engine output. The full-load operation range is an operation range in which the engine rotation range is at a higher rotation than a predetermined middle-speed rotation range, and the engine load is larger than a predetermined threshold. This middle-speed rotation range is a rotation range between a low-rotation range including an idling rotation and a high-rotation range including a maximum rotation.

It is an object of the present invention to increase the compressor efficiency when the engine operation range is in the full-load operation range, thereby further increasing the engine output.

### Means of Solution to the Problem

To achieve this object, a turbocharged engine according to the present invention includes an intake port having a downstream end connected to a combustion chamber, a surge tank communicating with an upstream end of the intake port, an exhaust port having an upstream end connected to the combustion chamber, an exhaust passage communicating with a downstream end of the exhaust port, a turbocharger including a turbine installed midway along the exhaust passage, and a compressor which rotates together with the turbine, a control valve configured to control a supercharging pressure of the turbocharger, an intake passage configured to guide air discharged from the compressor to the surge tank, a throttle valve installed midway along the intake passage, and a controller configured to control operations of the control valve and the throttle valve, wherein the controller controls the throttle valve, while setting a maximum opening degree of the throttle valve to an opening degree closer to a closing-side than a full-throttle opening degree, such that a compressor efficiency of the compressor is higher than a full-throttle compressor efficiency, when an engine operation range is in a full-load operation range.

A method of operating a turbocharged engine according to the present invention is a method of operating a turbocharged engine including a turbocharger which supercharges air in an intake passage of an engine including a throttle valve, the method including a determination step of determining whether or not an engine operation range is in a full-load operation range, a supercharging pressure control step of controlling a supercharging pressure of the turbocharger to a predetermined supercharging pressure by using a control valve, when the engine operation range is not in the full-load operation range, and a supercharging pressure control/throttle opening degree control combination step of controlling the supercharging pressure of the turbocharger to a predetermined supercharging pressure by using the control valve, and controlling the throttle valve, while setting a maximum opening degree of the throttle valve to an opening degree closer to a closing-side than a full-throttle opening degree, such that a compressor efficiency of a compressor is higher than a full-throttle compressor efficiency, when the engine operation range is in the full-load operation range.

### Effect of the Invention

In the present invention, a pressure difference is produced between the upstream side and the downstream side of the throttle valve when the engine operation range is in the full-load operation range. In this state, the pressure of the compressor outlet is higher than that in a full-throttle position, provided that the supercharging pressure is the same as that in the full-throttle position. That is, the pressure ratio, which is the ratio of the compressor outlet pressure to the compressor inlet pressure , is higher than that in the full-throttle position. This means that the compressor efficiency rises.

When the compressor efficiency thus rises, the work of the compressor is reduced. Accordingly, the work of the turbine is reduced, and the engine exhaust loss is reduced, so gas exchange is efficiently performed. Consequently, engine combustion improves, and the engine output increases. Also, since the work of the compressor is reduced, the outlet temperature of the compressor decreases, and this decreases the air intake temperature. As a consequence, nocking hardly occurs in the engine, and the ignition timing can be advanced, so the engine output can further be increased.

Accordingly, the present invention can increase the compressor efficiency when the engine operation range is in the full-load operation range, thereby further increasing the engine output.

### Brief Description of Drawings

Fig. 1 is a block diagram showing the configuration of a turbocharged engine according to the present invention;
Fig. 2 is a graph showing experimental data; and
Fig. 3 is a flowchart for explaining a method of operating the turbocharged engine according to the present invention.

### Best Mode for Carrying Out the Invention

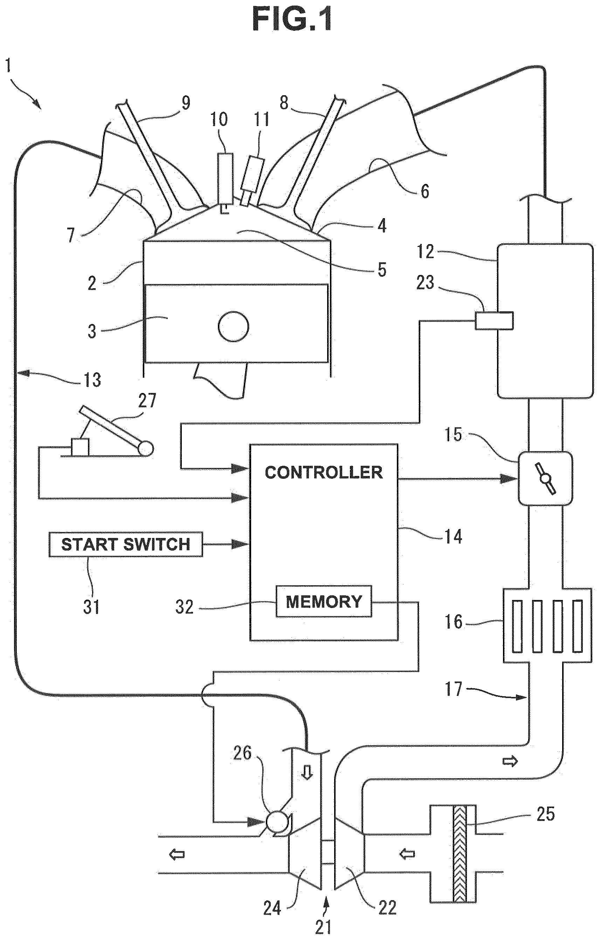

An embodiment of a turbocharged engine and a method of operating the turbocharged engine according to the present invention will be explained in detail below with reference to Figs. 1 to 3.

An engine 1 shown in Fig. 1 is a 4-cycle single-cylinder engine or 4-cycle multi-cylinder engine, and includes a cylinder 2, a piston 3, and a cylinder head 4.

The cylinder head 4 forms a combustion chamber 5 in cooperation with the cylinder 2 and piston 3. The combustion chamber 5 is formed as it is surrounded by the cylinder 2, piston 3, and cylinder head 4.

The cylinder head 4 includes an intake port 6 and an exhaust port 7, and provides an intake valve 8, an exhaust valve 9, an ignition plug 10, a fuel injector 11, and the like. The downstream end of the intake port 6 communicates with the combustion chamber 5, and the upstream end thereof communicates with a surge tank 12. The upstream end of the exhaust port 7 communicates with the combustion chamber 5, and the downstream end thereof communicates with an exhaust passage 13.

The intake valve 8 opens and closes the downstream end of the intake port 6. The exhaust valve 9 opens and closes the upstream end of the exhaust port 7.

The fuel injector 11 injects fuel into the combustion chamber 5. A controller 14 (to be described later) controls the operations of the ignition plug 10 and fuel injector 11.

The surge tank 12 is connected to a compressor 22 of a turbocharger 21 via a throttle valve 15 and an intake passage 17 including an intercooler 16 and the like. Air discharged from the compressor 22 is guided to the surge tank 12 through the intake passage 17.

The surge tank 12 includes an intake pipe pressure sensor 23 for sensing the internal pressure of the surge tank 12. The intake pipe pressure sensor 23 transmits the sensed pressure as data to the controller 14.

The throttle valve 15 is an electric valve for controlling the flow rate of air flowing through the intake passage 17, and formed midway along the intake passage 17 between the surge tank 12 and intercooler 16. The throttle valve 15 operates based on a control signal transmitted from the controller 14. The controller 14 sets the opening degree of the throttle valve 15.

The intercooler 16 cools air supplied from the compressor 22.

The turbocharger 21 includes a turbine 24 formed midway along the exhaust passage 13, and the compressor 22 which rotates together with the turbine 24.

The compressor 22 draws air from an air cleaner 25, compresses the air, and discharges the air toward the intercooler 16.

The turbine 24 of the turbocharger 21 rotates when blown by the exhaust gas. A wastegate valve 26 formed in the turbocharger 21 controls the amount of exhaust gas which blows the turbine 24. The controller 14 controls the operation of the wastegate valve 26. In this embodiment, the wastegate valve 26 corresponds to "a control valve" of the present invention.

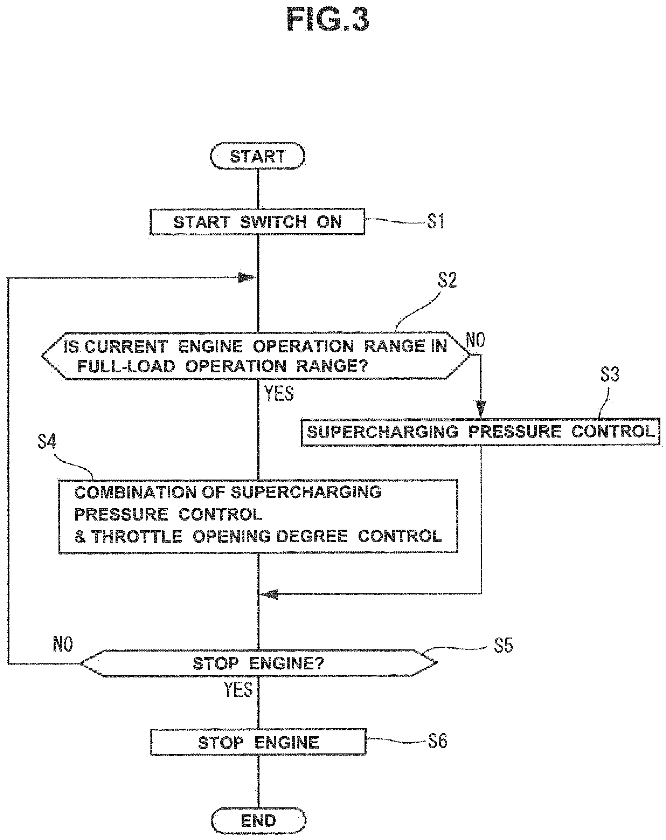

The controller 14 controls the operation of the engine 1, i.e., controls the rotational speed of the engine 1 based on the operation amount of an accelerator pedal 27 which is operated by a driver (not shown). When controlling the rotational speed of the engine 1, the controller 14 operates based on an operation method shown in a flowchart of Fig. 3.

This operation method of the engine 1 will be explained below by including a detailed explanation of the arrangement of the controller 14.

The controller 14 starts the operation when a start switch 31 (see Fig. 1) is operated (step S1). The controller 14 starts a starter motor (not shown), and starts the engine 1 by controlling the operations of the ignition plug 10 and fuel injector 11.

Then, the controller 14 determines whether the current engine operation range is in a full-load operation range (step S2). The full-load operation range is an operation range in which the engine rotation range is at a higher rotation than a middle-speed rotation range and the engine load is larger than a predetermined threshold. The middle-speed rotation range is a rotation range between a low-speed rotation range including an idling rotation and a high-speed rotation range including a maximum rotation. Step S2 corresponds to "a determination step" of the present invention. Although not shown, the current engine operation range can be sensed by using, e.g., a sensed value from a rotational speed sensor for sensing the rotational speed of a crank shaft.

If the rotational speed of the engine 1 is less than a predetermined low rotational speed or if the rotational speed is not less than the low rotational speed but the operation amount of the accelerator pedal 27 is smaller than a predetermined threshold (the load is small), it is determined in step S2 that the engine rotation range is the low-speed rotation range. "The low rotational speed" described above can be set at about, e.g., 3,000 rpm.

If the current engine operation range is not in the full-load operation range, supercharging pressure control is performed (step S3). Therefore, the process advances to step S3 if the engine rotation range is the low-speed rotation range as described above. In this embodiment, step S3 corresponds to "a supercharging pressure control step" of the present invention.

Supercharging pressure control is a control method of controlling the supercharging pressure of the turbocharger 21 to a predetermined supercharging pressure by using the wastegate valve 26. The supercharging pressure of the turbocharger 21 is equivalent to the air pressure on the throttle valve downstream side which is sensed by the intake pipe pressure sensor 23. Also, "a predetermined supercharging pressure" herein mentioned is a supercharging pressure defined based on the operation amount of the accelerator pedal 27, the rotational speed of the engine 1, and the like. A value read out from a map (not shown) can be used as this predetermined supercharging pressure. This map can be stored in a memory 32 (see Fig. 1) of the controller 14.

In step S3, the controller 14 controls the opening degrees of the throttle valve 15 and wastegate valve 26 by feedback control, so that the actual supercharging pressure of the turbocharger 21 matches the predetermined supercharging pressure. In this supercharging pressure control, the throttle valve 15 and wastegate valve 26 operate so as to obtain a supercharging pressure corresponding to the operation amount of the accelerator pedal 27, and the rotational speed of the engine 1 changes in accordance with the operation of the accelerator pedal 27.

On the other hand, if in step S2 the engine rotation range is at a higher rotation than the middle-speed rotation range and the operation amount of the accelerator pedal 27 is not smaller than the above-described threshold, i.e., when the engine operation range is in the full-load operation range, a control using both the above-described supercharging pressure control and a throttle opening degree control to be described below is performed (step S4). In this embodiment, step S4 corresponds to "a supercharging pressure control/throttle opening degree control combination step" of the present invention.

Steps S2 to S4 described above are repetitively performed until the start switch 31 is operated again and the engine 1 stops (steps S5 and S6).

The throttle opening degree control performed in step S4 is a control method of controlling the throttle valve 15 by setting the maximum opening degree of the throttle valve 15 to an opening degree closer to the closing-side than the full-throttle opening degree, so that the compressor efficiency is higher than the full-throttle compressor efficiency. In step S4, therefore, the controller 14 controls the supercharging pressure of the turbocharger 21 to a predetermined supercharging pressure (almost equal to the supercharging pressure when performing supercharging pressure control) by using the wastegate valve 26, and controls the throttle valve 15 by setting the maximum opening degree of the throttle valve 15 to an opening degree closer to the closing-side than the full-throttle opening degree so as to satisfy a predetermined condition. "The predetermined condition" herein mentioned is to make the current compressor efficiency higher than the full-throttle compressor efficiency. As is conventionally well known, the compressor efficiency can be obtained by calculations based on the inlet temperature and inlet pressure of the compressor 22 and the outlet temperature and outlet pressure of the compressor 22. In this embodiment, throttle opening degrees by which the operation can be performed at the best point of the compressor efficiency obtained by calculations and experiments in advance are mapped and stored in the memory 32 of the controller 14.

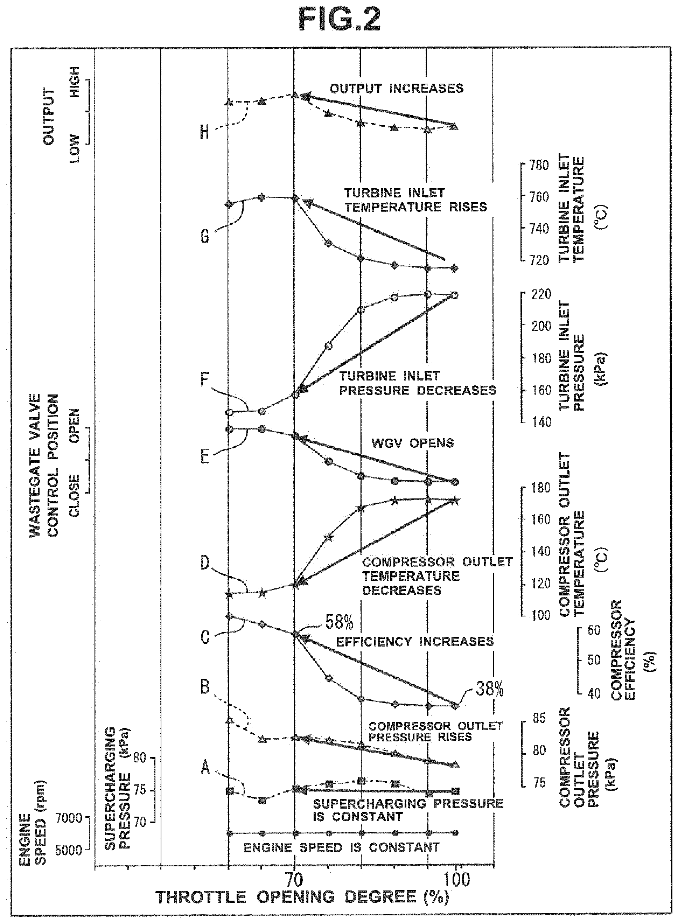

When the maximum opening degree of the throttle valve 15 is an opening degree closer to the closing-side than the full-throttle opening degree while the engine operation range is in the full-load operation range, a pressure difference is produced between the upstream side and the downstream side of the throttle valve 15. This state of the engine 1 will be explained with reference to Fig. 2. Fig. 2 is a graph showing data obtained by actually operating the engine 1 according to this embodiment. This data shown in Fig. 2 was obtained when the engine speed was 6,000 rpm.

As shown in Fig. 2, when the opening degree of the throttle valve 15 is controlled to be, e.g., 70% while the engine operation range is in the full-load operation range, a supercharging pressure A is almost equal to that in the full-throttle position (throttle opening degree = 100%), and a pressure B at the compressor outlet is higher than that in the full-throttle position. That is, the pressure ratio of the pressure B at the compressor outlet to the pressure (almost the atmospheric pressure) at the compressor inlet becomes higher than that in the full-throttle position. This means that the compressor efficiency increases, and the experimental results indicate that a compressor efficiency C increases to 58% from 38% in the full-throttle position, as shown in Fig. 2. That is, in step S4, the controller 14 controls the maximum opening degree of the throttle valve 15 to be closer to the closing-side than the full-throttle opening degree so that the current compressor efficiency is higher than the full-throttle compressor efficiency.

Since the compressor efficiency increases as described above, the work of the compressor 22 is reduced, so the work of the turbine 24 is reduced. That is, as shown in Fig. 2, a compressor outlet temperature D decreases as the compressor efficiency C increases, and the work of the turbine 24 is reduced. When the work of the turbine 24 thus is reduced, an opening degree E of the wastegate valve 26 whose operation is so controlled as to obtain a predetermined supercharging pressure based on the operation amount of the accelerator pedal 27 and the rotational speed of the engine 1 increases, so a turbine inlet pressure F decreases, and a turbine inlet temperature G rises.

When the work of the turbine 24 is reduced, the exhaust loss of the engine 1 is reduced, so gas exchange is efficiently performed. As a consequence, the combustion of the engine 1 improves, and an output H of the engine 1 is increased.

Also, when the work of the compressor 22 is reduced and the outlet temperature D of the compressor 22 decreases as described above, the intake temperature decreases, so knocking hardly occurs in the engine 1. This makes it possible to advance the ignition timing and further increase the engine output.

Accordingly, this embodiment can provide a turbocharged engine capable of further increasing the engine output by raising the efficiency of the compressor 22 when the engine operation range is in the full-load operation range, and a method of operating the turbocharged engine.

### Explanation of the Reference Numerals and Signs

1...engine, 21...turbocharger, 5...combustion chamber, 6...intake port, 7...exhaust port, 12...surge tank, 13...exhaust passage, 14...controller, 15...throttle valve, 17...intake passage, 21...turbocharger, 22...compressor, 24...turbine, 26...wastegate valve (control valve), S2... determination step, S3...supercharging pressure control step, S4...supercharging pressure control/throttle opening degree control combination step

## Claims

1. A turbocharged engine comprising:
an intake port having a downstream end connected to a combustion chamber;
a surge tank communicating with an upstream end of the intake port;
an exhaust port having an upstream end connected to the combustion chamber;
an exhaust passage communicating with a downstream end of the exhaust port;
a turbocharger including a turbine installed midway along the exhaust passage, and a compressor which rotates together with the turbine;
a control valve configured to control a supercharging pressure of the turbocharger;
an intake passage configured to guide air discharged from the compressor to the surge tank;
a throttle valve installed midway along the intake passage; and
a controller configured to control operations of the control valve and the throttle valve,
wherein the controller controls the throttle valve, while setting a maximum opening degree of the throttle valve to an opening degree closer to a closing-side than a full-throttle opening degree, such that a compressor efficiency of the compressor is higher than a full-throttle compressor efficiency, when an engine operation range is in a full-load operation range.

2. A method of operating a turbocharged engine including a turbocharger which supercharges air in an intake passage of an engine including a throttle valve, comprising:
a determination step of determining whether or not an engine operation range is in a full-load operation range;
a supercharging pressure control step of controlling a supercharging pressure of the turbocharger to a predetermined supercharging pressure by using a control valve, when the engine operation range is not in the full-load operation range; and
a supercharging pressure control/throttle opening degree control combination step of controlling the supercharging pressure of the turbocharger to a predetermined supercharging pressure by using the control valve, and controlling the throttle valve, while setting a maximum opening degree of the throttle valve to an opening degree closer to a closing-side than a full-throttle opening degree, such that a compressor efficiency of a compressor is higher than a full-throttle compressor efficiency, when the engine operation range is in the full-load operation range.
